Europäisches Patentamt

European Patent Office

Office européen des brevets

(19)

(11)   **EP 0 724 168 B1**

(12)   **EUROPÄISCHE PATENTSCHRIFT**

(45) Veröffentlichungstag und Bekanntmachung des
Hinweises auf die Patenterteilung:
**17.04.2002   Patentblatt 2002/16**

(51) Int Cl.⁷: **G02B 5/18**, G02B 27/44

(21) Anmeldenummer: **95119686.4**

(22) Anmeldetag: **14.12.1995**

(54) **Positionsmesseinrichtung mit Phasengitter und Herstellungsverfahren**

Position measuring device using a phase grating and fabrication method

Dispositif de mesure de position utilisant un réseau de phase et méthode de fabrication

(84) Benannte Vertragsstaaten:
**AT CH DE FR GB IT LI**

(30) Priorität: **28.01.1995  DE 19502727**

(43) Veröffentlichungstag der Anmeldung:
**31.07.1996   Patentblatt 1996/31**

(73) Patentinhaber: **Dr. Johannes Heidenhain GmbH
83292 Traunreut (DE)**

(72) Erfinder:
• **Franz, Andreas, Dr.
D-83308 Trostberg (DE)**
• **Huber, Walter
D-83278 Traunstein (DE)**

(56) Entgegenhaltungen:
**EP-A- 0 390 610         EP-A- 0 409 188
EP-A- 0 424 110         EP-A- 0 478 055
DE-A- 3 412 958         GB-A- 2 200 765
US-A- 4 828 356**

**Beschreibung**

Die Erfindung betrifft eine Positionsmeßeinrichtung mit einem Phasengitter und ein Verfahren zur Dimensionierung eines Phasengitters einer lichtelektrischen Positionsmeßeinrichtung.

In der Dissertation von Jörg Willhelm "Dreigitterschrittgeber", 1978 sind auf den Seiten 17 ff Phasengitter beschrieben. Auf Seite 19 ist die Verschmutzungsempfindlichkeit derartiger Phasengitter abgehandelt. Dort heißt es:

"Phasengitter sind verschmutzungsempfindlich. Wenn in die Gräben eines Durchlichtphasengitters eine Flüssigkeit mit derselben Brechzahl n gefüllt wird, hat das Gitter keine Wirkung mehr. Das Auflichtphasengitter ist etwas weniger anfällig, denn hier müßte die Flüssigkeit ... eine Brechzahl n = 2 besitzen, um das Gitter wirkungslos zu machen. Aus diesem Grund ist das geschützte Auflichtphasengitter schon von vornherein mit einer "Immersionsflüssigkeit" gefüllt. Verschmutzungen der Gitteroberfläche haben dann auf die Beugungswirkungsgrade des Gitters keinen Einfluß mehr. Durchlichtphasengitter werden in kritischen Einsatzfällen durch ein Glasfenster hermetisch abgedichtet."

Zur Vereinfachung der Herstellung derartiger abgedeckter Phasengitter wird in der DE 34 12 958 A1 ein geschütztes Durchlichtphasengitter beschrieben. Auf einem transparenten Substrat aus Glas ist nach dortiger Aussage ein Stufengitter aus einem dielektrischen Material auf photolithographischem Wege aufgebracht. Zum Schutz dieses Stufengitters gegen Verschmutzungen von außen ist als transparente Deckschicht eine ganzflächig aufgebrachte optische Kittschicht auf dem Stufengitter angeordnet. Die Oberflächen des Stufengitters und die freiliegenden Oberflächen des transparenten Substrats sind dabei vollständig von der optischen Kittschicht bedeckt, so daß diese Oberflächen für Verschmutzungen von außen nicht mehr zugänglich sind. Dennoch erfordert ein derartiges abgedecktes Phasengitter beträchtlichen Fertigungsaufwand.

Die aufgeführten Lösungen, Phasengitter von Positionsmeßeinrichtungen verschmutzungsunempfindlich zu gestalten bestehen also darin, die gefährdeten Bereiche als Festkörper auszubilden. Daher sind die Herstellungsverfahren solchermaßen geschützter Gitter aufwendig und teuer bzw. für feine Gitter, wie sie für Positionsmeßeinrichtungen benötigt werden, gar nicht anwendbar.

In der EP-A-0 424 110 und der GB-A-2 200 765 ist ein Phasengitter offenbart, dessen Relief-Struktur gegenüber dem Umgebungsmedium ungeschützt ist und dessen Material einen Brechungsindex aufweist, der höher als der Brechungsindex des Umgebungsmediums ist, wobei die Relief-Struktur auf einem Substratmaterial aufgebracht ist.

In der EP-A-0 390 610 ist ein optisches Element in Form eines Phasengitters sowie eines Antireflexionselementes beschrieben.

Der Erfindung liegt die Aufgabe zugrunde, eine Positionsmeßeinrichtung mit einem verschmutzungsunempfindlichen Phasengitter anzugeben, das einfach aufgebaut ist und gegenüber den in Frage kommenden Umgebungs-Medien die bekannten Nachteile nicht aufweist.

Die Aufgabe wird von einer Positionsmeßeinrichtung gelöst, welche die Merkmale des Anspruches 1 aufweist.

Ein Verfahren zur Dimensionierung eines Phasengitters ist im Anspruch 3 angegeben. Anhand der Zeichnungen wird die Erfindung mit Hilfe eines Ausführungsbeispieles noch näher erläutert.

Es zeigt

Figur 1     einen Querschnitt durch ein Phasengitter in einer Positionsmeßeinrichtung gemäß der Erfindung;

Figur 2     ein optisches Funktionsprinzip einer interferentiell arbeitenden Längenmeßeinrichtung und

Figur 3     einen Ausschnitt aus Figur 2.

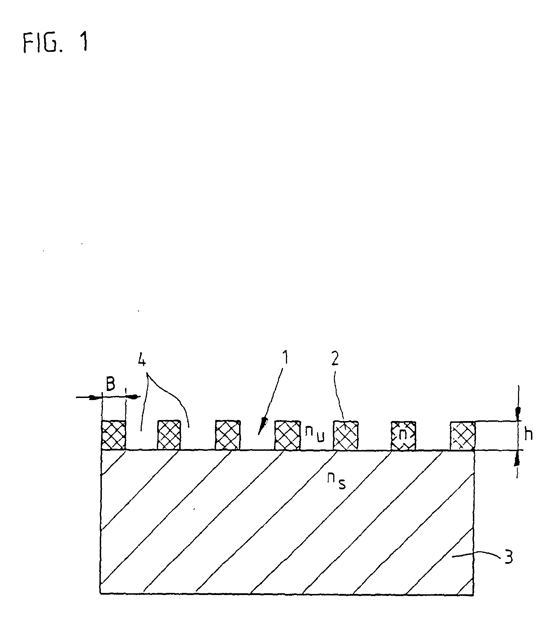

Ein in Figur 1 gezeigtes Phasengitter 1 besteht aus einer Relief-Struktur 2, die auf einem Substrat 3 aufgebracht ist. Die Relief-Struktur 2 besteht aus einem hochbrechenden Material. Dieses Material ist typischerweise ein dielektrisches Material wie Titandioxid ($TiO_2$), Tantalpentoxid ($Ta_2O_5$) oder auch Aluminiumoxid ($Al_2O_3$). Das Material des Substrates 3 ist typischerweise ein herkömmlicher Werkstoff wie Glas, Quarz oder dergleichen.

Das an das Phasengitter 1 angrenzende Medium ist nur in der Theorie Luft mit einem Brechungsindex von $n_U = 1$.

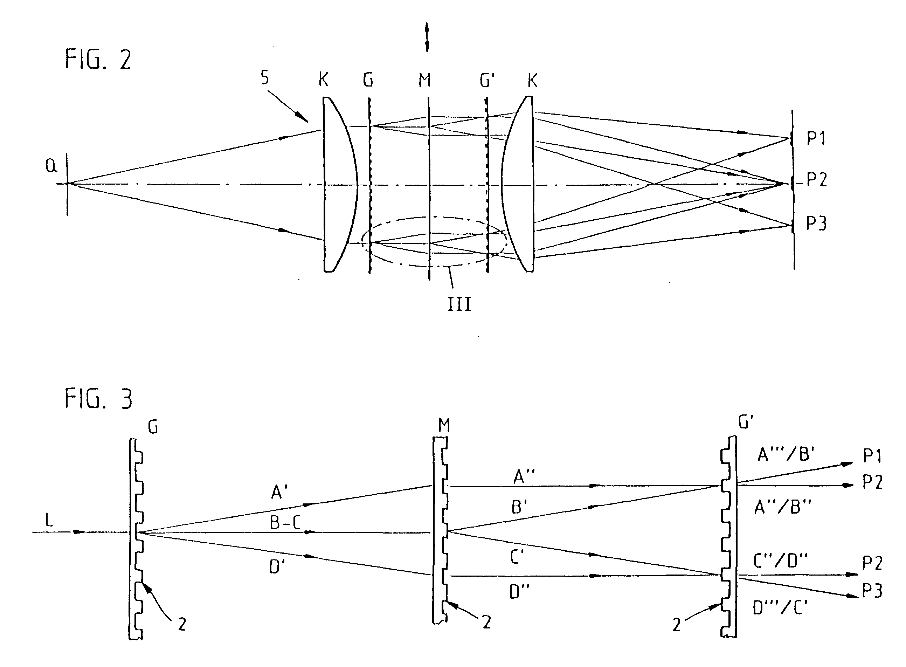

Wegen der erfindungsgemäßen ungeschützten Verwendung des Phasengitters 1 in Positionsmeßeinrichtungen, wie am Beispiel in den Figuren 2 und 3 gezeigt ist, wird es in der Praxis - wie schon erwähnt - aber zur Verschmutzung des Phasengitters 1 insbesondere seiner Relief-Struktur 2 durch Medien wie Wasser, Lösungsmittel, Öle etc. kommen. Diese Medien weisen einen Brechungsindex-Bereich von $n_U \approx 1,3$ bis 1,6 auf. Damit liegen sie nahe bei dem Brechungsindex $n_S$ des Substrates 3, der etwa $n_S \approx 1,5$ beträgt. Ungeschützt bedeutet dabei, daß die Lücken der Relief-Struktur 2 nicht bereits bei der Herstellung gezielt aufgefüllt werden, sondern dem Umgebungsmedium während des Einsatzes direkt ausgesetzt sind.

Für den Fall, daß die Brechungsindizes $n_U$ und n ähnlich oder gar gleich sind, wird die Beugungswirkung des Gitters 1 extrem reduziert bzw. aufgehoben.

Werden jedoch die Eingangs genannten hochbrechenden Materialien ($n \geq 1{,}8$) wie $Ta_2O_5$, $TiO_2$ oder $Al_2O_3$ zur Bildung der Relief-Struktur 2 eingesetzt, so bleibt in der Praxis immer ein ausreichender Brechungsindexunterschied vorhanden und damit die Beugungswirkung des Phasengitters 1 erhalten.

Die Verwendung von derart hochbrechenden Materalen mag zunächst nachteilig erscheinen, da die Reflexionen an den Grenzflächen der Relief-Struktur 2 bedeutend größer werden. Das führt zu Reflexionsverlusten an der Gitteroberfläche (Relief-Struktur 2). Daher kann unerwünschtes Streulicht entstehen.

Diese Nachteile werden durch eine geeignete Kombination von Brechungsindex n des Materials der Relief-Struktur 2 und deren geometrische Ausgestaltung vermieden.

Für die Beugungseigenschaften eines derartigen lamellaren Phasengitters ist neben der Stegbreite B die optisch wirksame Phasentiefe $\Theta$ relevant. Diese Phasentiefe $\Theta$ hängt dabei wiederum von der Steghöhe h der Relief-Struktur 2 ab und dem Brechungsindexunterschied zwischen dem Brechungsindex n der Relief-Struktur 2 und dem Brechungsindex $n_U$ des umgebenden Mediums 4.

Die optisch wirksame Phasentiefe $\Theta$ errechnet sich nach der Formel:

$$(I) \qquad \Theta = \frac{2\pi}{\lambda} h \, (n - n_U) - M \cdot 2\pi \quad (M = 0, 1, 2, ...)$$

Dabei ist $\Theta$ die Phasentiefe; n der Brechungsindex des Materials der Relief-Struktur 2, $\lambda$ die Wellenlänge des Lichtes, h die Höhe des Steges der Relief-Struktur und $n_U$ der Brechungsindex des umgebenden Mediums 4.

Das heißt, daß das Phasengitter 1 mit identischen Beugungseigenschaften durch unendlich viele Kombinationen des Brechungsindexes n und der Steghöhe h erzeugt werden kann. Die Dimensionierung des Phasengitters 1 erfolgt mit $n_U = 1$.

Bei den Betrachtungen der Reflexion muß berücksichtigt werden, daß zwei Reflexionen erfolgen, nämlich beim Übergang vom Umgebungs-Medium 4 zur Relief-Struktur 2 sowie von der Relief-Struktur 2 zum Substrat-Material 3. Wenn die Steghöhe h geeignet gewählt wird, kann erreicht werden, daß die Strahlenbündel der beiden Reflexionen destruktiv miteinander interferieren, sich also gegenseitig auslöschen. Senkrechter Lichteinfall vorausgesetzt ist dies der Fall, wenn gilt:

$$(II) \qquad h \cdot n = \frac{\lambda}{2} N \qquad (N = 1, 2, 3, ...)$$

Für schrägen Lichteinfall gilt entsprechend:

$$(II') \qquad h \cdot n \cdot \cos \left( \arcsin \frac{\sin(\alpha)}{n} \right) =$$

$$h \cdot n \cdot \sqrt{1 - \left( \frac{\sin(\alpha)}{n} \right)^2} = \frac{\lambda}{2} N$$

$$(N = 1, 2, 3, ...)$$

wobei $\alpha$ der Einfallswinkel des Lichtes in Luft ist.

Bei der Herstellung solcher Phasengitter sollte also immer auf die Einhaltung der Bedingungen (II) bzw. (II') geachtet werden.

Konkret sieht das folgendermaßen aus:

Auflösung von (II, II') nach h und Einsetzen in (I) führt zu:

$$\Theta = \pi \cdot \left( N \cdot \frac{n-1}{n} - 2M \right)$$

oder

$$n = \frac{N}{N - 2M - \dfrac{\Theta}{\pi}}$$

$\Theta$ ist durch die gewünschte Beugungseigenschaften des Gitters gegeben, z.B. $\Theta = \pi$.

Daraus folgt: n = 2 (mit N = 2 und M = 0).

Man baut also die Relief-Struktur 2 des Gitters 1 aus Stegen mit einer Höhe h und einem Brechungsindex n nahe 2 auf. Die erforderliche Steghöhe h folgt dann aus Gleichung (I). Diese Betrachtungen gelten bei der Beleuchtung des Phasengitters 1 von der Relief-Struktur 2 her sowie auch von der Seite des Substrates 3 her.

In den Figuren 2 und 3 ist eine erfindungsgemäße Positionsmeßeinrichtung mit dem beschriebenen Phasengitter gezeiht.

Der optische Aufbau eines Gitter-Interferometers 5 ist in Figur 2 stark vereinfacht im entfalteten Strahlengang dargestellt. Die Beleuchtungseinrichtung bestehend aus Lichtquelle Q, Kondensor K und Photoelementen P1, P2, P3 wurde schematisch dargestellt. Die von der Lichtquelle Q und dem Kondensor K erzeugte ebene Welle sowie die gebeugten Wellen sind durch die Normalen zur Wellenfront dargestellt. Es wird von einer ebenen Welle einer Wellenlänge $\lambda$ ausgegangen, die senkrecht auf das Abtastgitter G fällt.

Das Arbeitsprinzip basiert darauf, daß die an einem bewegten Gitter-Maßstab M gebeugten Teilstrahlenbündel in der Phase der Lichtfrequenz von der Gitterbewegung moduliert werden.

Das heißt, während das Gitter M sich um eine Gitterperiode verschiebt, durchläuft die Phase der beiden gebeugten Teilstrahlenbündel 1. Ordnung je 360°. Die Phasen von +1. Ordnung und -1. Ordnung bewegen sich dabei entgegengesetzt. Werden die beiden Strahlenbündel ±1. Ordnung wieder zur Interferenz gebracht, entsteht ein mit doppelter Verschiebefrequenz moduliertes Lichtstrahlenbündel.

Dies gilt zwar sowohl bei Amplituden- als auch bei Phasengitter-Maßstäben. Phasengitter können jedoch so dimensioniert werden, daß die nullte Ordnung ausgelöscht wird und somit in den beiden ersten Beugungsordnungen ein größerer Anteil der eingestrahlten Energie zur Verfügung steht.

Die von der Lichtquelle (Infrarotstrahler Q) ausgehende Strahlung wird von der Kondensorlinse K kollimiert und beleuchtet das Abtast-Phasengitter G.

Wie in Figur 2 gezeigt, wird ein auf dieses Gitter G auftreffendes Lichtstrahlenbündel L teilweise gebeugt bzw. hindurchgelassen. Die dabei entstehenden Teilstrahlenbündel A', B-C und D' werden am reflektierenden Phasengitter-Maßstab M gebeugt und interferieren nach Wiedereintritt in das Abtast-Phasengitter G bzw. G' miteinander. Die Kondensorlinse K fokussiert die in sich parallelen Teilstrahlenbündel A'''/B', A''/B'' bzw. C''/D'' und D'''/C' auf die zugeordneten Photodetektoren P1, P2 und P3.

Bei Bewegung des Maßstabes M liefern die drei Photodetektoren P1, P2, P3 jeweils um 1/3 der Signalperiode phasenverschobene Signale (Signalperiode = halbe Maßstabgitterperiode).

Diese Phasenverschiebung wird bestimmt von der Gestaltung des Abtastgitters G bwz. G' (Furchenbreite und -tiefe), wie bereits aus der EP-0 163 362-B1 bekannt ist.

Im folgenden wird das Zusammenwirken der dargestellten Komponenten erläutert. Die einfallende Welle wird beim Durchgang durch das Indexgitter (Abtastgitter) G im wesentlichen in die drei Richtungen -1, 0, +1 gebeugt. Das Indexgitter G ist dabei so ausgebildet, daß die Strahlen der 0. Ordnung gegenüber den Strahlen der ±1. Ordnung in ihrer Phase um den Betrag $\Phi$ verzögert werden. Beim Auftreffen der Strahlen auf den Maßstab M werden diese jeweils in zwei Richtungen der Ordnung ±1 gebeugt. Der Maßstab M ist so ausgebildet, daß keine 0. Beugungsordnung auftritt.

Beim Verschieben des Maßstabes M relativ zu dem Index- oder Abtastgitter G und G' (die körperlich identisch sein können) erfahren die am Maßstab M gebeugten Strahlen der +1. Ordnung (n = +1) eine der Verschiebung x proportionale Phasenänderung um den Betrag $\Omega$ und die der -1. Ordnung (n = -1) eine um $-\Omega$, wobei

$$\Omega = \frac{2\pi x}{C}$$

ist.

Beim Durchgang durch das Index- oder Abtastgitter G oder G' tritt wiederum Beugung und Phasenverschiebung ein. Wellen gleicher Richtung und gleicher optischer Weglänge kommen zur Interferenz. Die Phasen der interferierenden Teilwellen ergeben sich dabei aus der Summe der Phasenänderungen, die die einzelnen Teilstrahlen beim Durchgang durch die Gitter erfahren. Bei Beleuchtung mit nichtmonochromatischer und räumlich inkohärenter Lichtquelle tragen nur die in Richtung +1, 0, -1 weisenden, interferierenden Wellen zur Signalgewinnung bei.

Am Ausgang des Gittersystemes interferiert in der mit +1 bezeichneten Richtung eine Welle der Phase $-\Omega$ mit einer Welle der Phase $2\Phi + \Omega$.

Als Gitterteilungen G, G' und M werden bevorzugt Phasengitter verwendet, die als Transmissions-Phasengitter ausgebildet sind, wie Figur 1 zeigt.

Im Gegensatz zu Längen- oder Winkelmeßeinrichtungen, die mit herkömmlichen an der Oberfläche profilierten Phasengittern ausgestattet sind, machen sich bei der erfindungsgemäßen Positionsmeßeinrichtung die Umgebungsmedien nicht störend bemerkbar.

Durchlicht- oder Transmissions-Phasengitter bedeutet, daß die Relief-Struktur 2 bestehend aus den Stegen mit dem Brechungsindex n und die dazwischenliegenden Lücken transparent sind und die Meßstrahlenbündel (Teilstrahlenbündel) hindurchtreten.

**Patentansprüche**

1. Positionsmeßeinrichtung, umfassend eine Lichtquelle (Q) die Wellen der Wellenlänge λ aussendet, sowie ein Phasengitter bestehend aus einem transparenten Substratmaterial (3), auf dem eine transparente Relief-Struktur (2) in Form von beabstandeten Stegen mit einem Brechungsindex n ≥ 1,8 und einer optisch wirksamen Phasentiefe θ = π eines auftreffenden Lichtes der Wellenlänge λ aufgebracht ist und das Phasengitter (M, G, 1) einschließlich der Lücken zwischen den Stegen gegenüber einem Umgebungs-Medium (4) ungeschützt ist, wobei die Steghöhe (h) und der Brechungsindex (n) der Relief-Struktur so aufeinander abgestimmt sind, daß sich Reflexionen dieses auftreffenden Lichtes , die beim Übergang zwischen dem Umgebungs-Medium (4) und der Relief-Struktur (2) sowie zwischen der Relief-Struktur (2) und dem Substratmaterial (3) auftreten aufgrund destruktiver Interferenz auslöschen.

2. Positionsmeßeinrichtung nach Anspruch 1, **dadurch gekennzeichnet, daß** für die Steghöhe (h) und für den Brechungsindex (n) der Relief-Struktur (2) folgende Beziehungen gelten:

   a) bei senkrecht auftreffendem Licht der Wellenlänge λ auf das Phasengitter (M, G, 1) gilt:

$$h*n = \frac{\lambda}{2}*N$$

   mit N = 1, 2,3...
   und

$$\theta = \frac{2*\pi}{\lambda}*h*(n\text{-}1)\text{-}M*2\pi = \pi$$

   mit M = 0, 1, 2, 3 ...
   b) bei schräg auftreffendem Licht der Wellenlänge λ auf das Phasengitter (M,G,1) gilt:

$$h*n*\cos\left(\arcsin\frac{\sin\alpha}{n}\right) = h*n*\sqrt{1-\left(\frac{\sin\alpha}{n}\right)^2} = \frac{\lambda}{2}*N$$

   mit N = 1, 2, 3 .... und α = Einfallswinkel des Lichtes in Luft und

$$\theta = \frac{2*\pi}{\lambda}*h*(n\text{-}1)\text{-}M*2\pi = \pi$$

   mit M = 0,1,2,3...

3. Verfahren zur Dimensionierung eines Phasengitters einer Positionsmeßeinrichtung, mit einem transparenten Substratmaterial (3), auf dem eine transparente Relief-Struktur (2) in Form von beabstandeten Stegen mit einem Brechungsindex n ≥ 1,8 und einer vorgewählten optisch wirksamen Phasentiefe θ eines unter einem Einfallswinkel α auftreffenden Lichtes der Wellenlänge λ aufgebracht ist und das Phasengitter (M, G, 1) einschließlich der Lücken zwischen den Stegen gegenüber einem Umgebungs-Medium (4) ungeschützt ist, wobei die Steghöhe (h) und der Brechungsindex (n) der Relief-Struktur derart berechnet werden, daß folgende Bedingungen erfüllt sind:

   a) bei senkrecht auftreffendem Licht der Wellenlänge λ auf das Phasengitter (M, G, 1) gilt:

$$h*n = \frac{\lambda}{2}*N$$

   mit N=1,2,3...
   und

# EP 0 724 168 B1

$$\theta = \frac{2*\pi}{\lambda}*h*(n\text{-}1)\text{-}M*2\pi$$

mit M = 0, 1, 2, 3 ...

b) bei schräg auftreffendem Licht der Wellenlänge λ auf das Phasengitter (M,G,1) gilt:

$$h*n*\cos\left(\arcsin\frac{\sin\alpha}{n}\right) = h*n*\sqrt{1-\left(\frac{\sin\alpha}{n}\right)^2} = \frac{\lambda}{2}*N$$

mit N = 1, 2, 3 .... und α = Einfallswinkel des Lichtes in Luft und

$$\theta = \frac{2*\pi}{\lambda}*h*(n\text{-}1)\text{-}M*2\pi$$

mit M = 0, 1, 2, 3...

4. Verfahren nach Anspruch 3, **dadurch gekennzeichnet, daß** die vorgewählte optische Phasentiefe θ = π ist.

**Claims**

1. Position measuring device comprising a light source (Q) which emits waves of the wavelength λ, and a phase grating which comprises a transparent substrate material (3), on which there is applied a transparent relief structure (2) in the form of spaced webs with a refractive index of n ≥ 1.8 and an optically effective phase depth θ = π of impinging light of the wavelength λ, and the phase grating (M, G, 1) including the gaps between the webs is unprotected relative to a surrounding medium (4), the web-height (h) and the refractive index (n) of the relief structure (4) being adapted to each other such that reflections of this impinging light, which occur during transition between the surrounding medium (4) and the relief structure (2) and between the relief structure (2) and the substrate material (3), are extinguished due to destructive interference.

2. Position measuring device according to claim 1, **characterised in that**, for the web-height (h) and for the refractive index (n) of the relief structure (2), the following relations apply:

a) in the case of light of the wavelength λ impinging perpendicularly on the phase grating (M, G, 1), there applies:

$$h*n = \frac{\lambda}{2}*N$$

with N = 1, 2, 3 ...
and

$$\theta = \frac{2*\pi}{\lambda}*h*(n\text{-}1)\text{-}M*2\pi = \pi$$

with M = 0, 1, 2, 3 ...

b) in the case of light of the wavelength λ impinging obliquely on the phase grating (M, G, 1), there applies:

$$h*n*\cos\left(\arcsin\frac{\sin\alpha}{n}\right) = h*n*\sqrt{1-\left(\frac{\sin\alpha}{n}\right)^2} = \frac{\lambda}{2}*N$$

withN = 1, 2, 3 .... and α = angle of incidence of the light in air and

6

$$\theta = \frac{2*\pi}{\lambda}*h*(n\text{-}1)\text{-}M*2\pi = \pi$$

with M = 0, 1, 2, 3 ...

3. Method for dimensioning a phase grating of a position measuring device, having a transparent substrate material (3) on which there is applied a transparent relief structure (2) in the form of spaced webs with a refractive index of n ≥ 1.8 and a pre-selected optically effective phase depth θ of light of the wavelength λ impinging below an angle of incidence α, and the phase grating (M, G, 1) including the gaps between the webs is unprotected relative to a surrounding medium (4), the web-height (h) and the refractive index (n) of the relief structure being calculated in such a manner that the following conditions are fulfilled:

a) in the case of light of the wavelength λ impinging perpendicularly on the phase grating (M, G, 1), there applies:

$$h*n = \frac{\lambda}{2}*N$$

with N = 1,2,3...
and

$$\theta = \frac{2*\pi}{\lambda}*h*(n\text{-}1)\text{-}M*2\pi$$

with M = 0,1,2,3...

b) in the case of light of the wavelength λ impinging obliquely on the phase grating (M, G, 1), there applies:

$$h*n*\cos\left(\arcsin\frac{\sin\alpha}{n}\right) = h*n*\sqrt{1-\left(\frac{\sin\alpha}{n}\right)^2} = \frac{\lambda}{2}*N$$

with N = 1, 2, 3 ....and α = angle of incidence of the light in air and

$$\theta = \frac{2*\pi}{\lambda}*h*(n\text{-}1)\text{-}M*2\pi$$

with M = 0,1,2,3...

4. Method according to claim 3, **characterised in that** the pre-selected optical phase depth is θ = π.

**Revendications**

1. Dispositif de mesure de position comprenant une source de lumière (Q), qui émet des ondes de longueur d'onde λ, ainsi qu'un réseau de phase formé d'un matériau substrat (3) transparent sur lequel est appliquée une structure en relief (2) transparente, sous la forme de barrettes espacées, avec un indice de réfraction n≥1,8 et une profondeur de phase optiquement active θ=π d'une lumière incidente de longueur d'onde λ, le réseau de phase (M, G, 1), y compris les espaces entre barrettes, n'étant pas protégé vis-à-vis du milieu ambiant (4), dispositif de mesure dans lequel la hauteur (h) des barrettes et l'indice de réfraction (n) de la structure en relief sont mutuellement adaptés afin que les réflexions de la lumière incidente qui se produisent au niveau de l'interface entre le milieu ambiant (4) et la structure en relief (2) ainsi qu'entre la structure en relief (2) et le matériau substrat (3) s'annulent par interférence destructive.

2. Dispositif de mesure de position selon la revendication 1, **caractérisé en ce que** les relations pour la hauteur de barrette (h) et pour l'indice de réfraction (n) de la structure en relief (2) sont les suivantes :

a) pour de la lumière de longueur d'onde λ arrivant orthogonalement sur le réseau de phase (M, G, 1) :

$$h*n = \frac{\lambda}{2}*N$$

*avec N* = 1, 2, 3...
et

$$\theta = \frac{2*\pi}{\lambda}*h*(n\text{-}1)\text{-}M*2\pi = \pi$$

*avec M*=0, 1, 2, 3,...
b) pour de la lumière de longueur d'onde λ arrivant en biais sur le réseau de phase (M, G, 1) :

$$h * n * \cos\left(\arcsin\frac{\sin\alpha}{n}\right) \approx h * n * \sqrt{1-\left(\frac{\sin\alpha}{n}\right)^2} = \frac{\lambda}{2} * N$$

avec N=1, 2, 3,... et α=angle d'incidence de la lumière dans l'air et

$$\theta = \frac{2*\pi}{\lambda}*h*(n\text{-}1)\text{-}M*2\pi = \pi$$

avec M=0, 1, 2, 3,...

**3.** Procédé pour le dimensionnement d'un réseau de phase d'un dispositif de mesure de position comprenant un matériau substrat (3) transparent sur lequel est appliquée une structure en relief (2) transparente, sous la forme de barrettes espacées, avec un indice de réfraction n≥1,8 et une profondeur de phase optiquement active prédéterminée θ d'une lumière incidente de longueur d'onde λ, arrivant sous un angle α, le réseau de phase (M, G, 1), y compris les espaces entre les barrettes, n'étant pas protégé vis-à-vis du milieu ambiant (4), dans lequel la hauteur (h) des barrettes et l'indice de réfraction (n) de la structure en relief sont calculés de telle sorte que les conditions suivantes soient satisfaites:

a) pour de la lumière de longueur d'onde λ arrivant orthogonalement sur le réseau de phase (M, G, 1):

$$h*n = \frac{\lambda}{2}*N$$

*avec N* = 1, 2, 3...
et

$$\theta = \frac{2*\pi}{\lambda}*h*(n\text{-}1)\text{-}M*2\pi = \pi$$

*avec M* = 0, 1, 2, 3,...
b) pour de la lumière de longueur d'onde λ arrivant en biais sur le réseau de phase (M, G, 1):

$$h * n * \cos\left(\arcsin\frac{\sin\alpha}{n}\right) \approx h * n * \sqrt{1-\left(\frac{\sin\alpha}{n}\right)^2} = \frac{\lambda}{2} * N$$

avec N=1, 2, 3,... et α=angle d'incidence de la lumière dans l'air et

$$\theta = \frac{2*\pi}{\lambda}*h*(n\text{-}1)\text{-}M*2\pi = \pi$$

avec M=0, 1, 2, 3,...

**4.** Procédé selon la revendication 3, **caractérisé en ce que** la profondeur de phase optique présélectionnée est $\theta=\pi$.

$$\theta = \frac{2*\pi}{\lambda}*h*(n\text{-}1)\text{-}M*2\pi = \pi$$

FIG. 1

FIG. 2

FIG. 3

EP 0 724 168 B1